Europäisches Patentamt

European Patent Office

Office européen des brevets

(11) Veröffentlichungsnummer: **0 081 701**
B1

# (12) EUROPÄISCHE PATENTSCHRIFT

(45) Veröffentlichungstag der Patentschrift:
12.06.85

(21) Anmeldenummer: 82110726.5

(22) Anmeldetag: 20.11.82

(51) Int. Cl.⁴: **C 08 G 18/32, C 08 G 18/50,
C 08 J 9/34, C 08 L 75/12**

(54) Verfahren zur Herstellung von elastischen Formkörpern.

(30) Priorität: 02.12.81 DE 3147736

(43) Veröffentlichungstag der Anmeldung:
22.06.83 Patentblatt 83/25

(45) Bekanntmachung des Hinweises auf die Patenterteilung:
12.06.85 Patentblatt 85/24

(84) Benannte Vertragsstaaten:
AT BE CH DE FR GB IT LI NL SE

(56) Entgegenhaltungen:
EP - A - 0 069 286
DE - A - 2 622 951
GB - A - 1 049 644
GB - A - 1 326 901
GB - A - 1 520 557
US - A - 3 838 076
US - A - 4 111 861

(73) Patentinhaber: BAYER AG, Konzernverwaltung RP
Patentabteilung, D-5090 Leverkusen 1 Bayerwerk (DE)

(72) Erfinder: Weber, Christian, Dr., Paul-Klee-Strasse 68a,
D-5090 Leverkusen (DE)
Erfinder: Wirtz, Hans, Dr., Am Thelenhof 17,
D-5090 Leverkusen (DE)
Erfinder: Seel, Klaus, Dr., Märchenstrasse 72,
D-5000 Köln 80 (DE)

ACTORUM AG

## Beschreibung

Die vorliegende Erfindung betrifft ein verbessertes Einstufenverfahren zur Herstellung elastischer Formkörper mit einer geschlossenen Oberflächenschicht mittels der Reaktionsspritzgusstechnik, in welchem hochreaktive Systeme aus Polyisocyanaten, höhermolekularen Polyaminoverbindungen und aromatischen Diaminen eingesetzt werden. Durch Mitverwendung innerer Trennmittel wird eine Entformung ohne Anwendung externer Trennmittel realisierbar.

Die Herstellung von Formkörpern mit einer geschlossenen Oberflächenschicht nach dem Isocyanatpolyadditionsverfahren ist grundsätzlich bekannt. Sie erfolgt z. B. durch Einführen einer reaktions- und ggf. auch schäumfähigen Mischung auf Basis von Verbindungen mit mehreren reaktionsfähigen Wasserstoffatomen und Polyisocyanaten in eine Form (vgl. z. B. die DE-AS Nr. 1196864). Als Verbindungen mit reaktionsfähigen Wasserstoffatomen kommen dabei vor allem Hydroxylgruppen aufweisende Polyether in Frage, während als Beispiel für Polyisocyanate 2,4- und 2,6-Toluylendiisocyanat, deren Isomerengemische sowie das durch Anilin/Formaldehyd-Kondensation und anschliessende Phosgenierung erhaltene Polyphenylpolymethylenpolyisocyanat zu nennen sind. Als Treibmittel können z. B. Wasser und/oder Fluorkohlenwasserstoffe dienen. Auch Katalysatoren, wie sie für die Polyurethanherstellung an sich bekannt sind, werden im allgemeinen mitverwendet.

Bei geeigneter Wahl der Ausgangskomponenten (zusätzlich können z. B. auch noch Kettenverlängerungsmittel wie Glykole oder Diamine mitverwendet werden) ist es nach dieser Verfahrensweise möglich, sowohl elastische als auch starre Produkte bzw. alle dazwischenliegenden Varianten herzustellen. Für hochbeanspruchte Formteile wählt man im allgemeinen schwach verzweigt aufgebaute Rohstoffe, die nach der Verarbeitung Materialien mit einem elastomerähnlichen Eigenschaftsbild ergeben. Derartige Formteile werden schon seit langem (z. B. in der Schuhindustrie als Sohlen) in technischem Massstab hergestellt. Grosse Formteile fanden Eingang in die Automobilindustrie. Die Verarbeitung der Rohstoffe zu Karosserieteilen erfolgt dabei vor allem nach dem sogenannten Reaktionsspritzgussverfahren (RSG-Verfahren). Es handelt sich dabei um eine Fülltechnik, bei der die hochaktiven, flüssigen Ausgangskomponenten über Hochdruckdosieraggregate mit grosser Austragsleitung nach Vermischen in sogenannten zwangsgesteuerten Mischköpfen in kürzester Zeit in die Form eingespritzt werden.

In der DE-OS Nr. 2622951 (US-PS Nr. 4218543) wird beschrieben, wie man selbst extrem reaktive Systeme, also *one shot*-Gemische, aus bei Raumtemperaturen flüssigen Di- oder Polyisocyanaten auf Basis von 4,4'-Diisocyanatdiphenylmethan, aktiven aromatischen Polyaminen, höhermolekularen Polyhydroxylverbindungen mit primären Hydroxylgruppen und starken Katalysatoren, mit Startzeiten bis herab zu weniger als 1 s, nach dieser Methode verarbeiten kann. Bei solchen Systemen erfolgt der Übergang der flüssigen in die feste Phase nahezu schlagartig, was dazu führt, dass das flüssige Reaktionsgemisch in der Form an deren Wandungen gleichsam erstarrt.

Ein Vorteil dieser Systeme ist die Tatsache, dass für die Entformung aus geometrisch einfachen Plattenwerkzeugen kein externes Trennmittel als Trennhilfe angewandt zu werden braucht. Für eine Serienproduktion jedoch muss in regelmässigen Abständen Trennmittel aufgetragen werden. Während dieser Zeit fällt das Werkzeug für die Produktion aus. Feine Gravierungen des Werkzeuges werden mit der Zeit von den Trennmittelresten überdeckt. Ein Entfernen dieser fest haftenden Rückstände in den häufig stark konturierten Werkzeugen ist nur mit grossem Aufwand möglich. Die Kunststoffteile sind mit einem dünnen Trennfilm überzogen, auf dem Lacksysteme nicht haften. Die Teile müssen vor der Lackierung geschliffen oder mit Lösungsmitteln abgewaschen werden, um eine ausreichende Haftung des Lackes auf dem Kunststoff zu erzielen.

Die Mitverwendung der aus der Patentliteratur bekannten, beispielsweise für die Herstellung von selbsttrennenden Schaumstoffformkörpern auf Polyurethanbasis, gut geeigneten Formtrennmittel (vgl. z. B. US-PS Nr. 3726952, GB-PS Nr. 1365215, US-PS Nr. 4033912, 4024090, 4058492, DE-OS Nr. 2427273, 2431968, 2307589, 2319648 oder US-PS Nr. 4076695) in den speziellen Reaktionsgemischen gemäss DE-OS Nr. 2622951 führt im allgemeinen bestenfalls zu einer geringfügigen Verbesserung der selbsttrennenden Eigenschaften der nach der Reaktionsspritzgusstechnik hergestellten Elastomeren. Die Mitverwendung von saure Gruppen, insbesondere von Carboxylgruppen aufweisenden Trennmitteln in den Rezepturen gemäss DE-OS Nr. 2622951, ist ausserdem mit dem Nachteil verbunden, dass die Katalyse der hochreaktiven Systeme gestört wird und Formkörper ohne Anfangsfestigkeit resultieren.

Es war daher die der vorliegenden Erfindung zugrundeliegende Aufgabe, ein verbessertes Verfahren zur Herstellung von elastomeren Formkörpern zur Verfügung zu stellen, welches eine problemlose Serienfertigung auch dünnwandiger Formteile nach dem Reaktionsspritzgussverfahren ohne Anwendung externer Trennmittel ermöglicht.

Diese Aufgabe konnte durch das nachstehend näher beschriebene erfindungsgemässe Verfahren gelöst werden. Es zeigte sich nämlich überraschenderweise, dass beim Austausch der höhermolekularen Polyhydroxylverbindungen im System der DE-OS Nr. 2622951 durch entsprechende Verbindungen mit Aminoendgruppen einerseits auf eine Katalyse durch tertiäre Amine bzw. zinnorganische Verbindungen verzichtet werden kann und andererseits, dass die Verwendung der bekannten inneren Trennmittel des Standes der Technik bei nachstehend näher beschriebenen erfindungsgemässen Verfahren im Gegensatz zum Verfahren gemäss DE-OS Nr. 2622951 zu einer ganz wesentlichen Verbesserung der selbsttrennenden Eigenschaften der Formkörper führt, so dass auf die Anwendung externer Trennmittel verzichtet werden kann.

Gegenstand der Erfindung ist ein Verfahren zur Herstellung von elastischen Formkörpern mit einer geschlossenen Oberflächenschicht, aus Polyharnstoffelastomeren durch Umsetzung in geschlossenen Formen eines Reaktionsgemisches aus

a) einer Polyisocyanatkomponente, bestehend aus mindestens einem Di- oder Polyisocyanat mit ausschliesslich aromatisch gebundenen Isocyanatgruppen,

b) Verbindungen mit einem Molekulargewicht zwischen 1800 und 12000, welche mindestens 2 gegenüber Isocyanatgrupen reaktionsfähige Gruppen aufweisen,

c) Diaminen mit 2 primären und/oder sekundären, aromatisch gebundenen Aminogruppen des Molekulargewichtsbereichs 108-400, und

d) ggf. den in der Polyurethanchemie an sich bekannten Hilfs- und Zusatzmitteln,

wobei die Komponenten a-d als one shot-System nach der Reaktionsspritzgusstechnik verarbeitet werden, dadurch gekennzeichnet, dass man als Komponente b Polyether verwendet, deren gegenüber Isocyanatgruppen reaktionsfähige Gruppen zumindest zu 50% aus primären und/oder sekundären Aminogruppen bestehen.

Bei der beim erfindungsgemässen Verfahren einzusetzenden Polyisocyanatkomponente a handelt es sich um aromatische Di- und/oder Polyisocyanate, d. h. um solche, die ausschliesslich aromatisch gebundene Isocyanatgruppen aufweisen. Beispiele für derartige Verbindungen sind 2,4- und/oder 2,6-Diisocyanatotoluol, 2,2'-, 2,4'- und/oder 4,4'-Diisocyanatodiphenylmethan, Gemische dieser letztgenannten Isomeren mit ihren höheren Homologen, wie sie bei der bekannten Phosgenierung von Anilin/Formaldehyd-Kondensaten anfallen, Urethangruppen aufweisende Umsetzungsprodukte der genannten Di- und/oder Polyisocyanate mit unterschüssigen Mengen an aliphatischen Polyhydroxylverbindungen des Molekulargewichtsbereichs 62-700, wie z. B. Ethylenglykol, Trimethylolpropan, Propylenglykol, Dipropylenglykol oder Polypropylenglykolen des genannten Molekulargewichtsbereichs, durch partielle Carbodiimidisierung der Isocyanatgruppen der genannten Di- und/oder Polyisocyanate modifizierte Di- und/oder Polyisocyanate, methylsubstituierte Diisocyanate der Diphenylmethanreihe bzw. deren Gemische der beispielsweise in EP-OS Nr. 0024665 beschriebenen Art oder beliebige Gemische derartiger aromatischer Di- und Polyisocyanate.

Zu den bevorzugten Ausgangsmaterialien a gehören die bei Raumtemperatur flüssigen Derivate des 4,4'-Diisocyanatodiphenylmethans, beispielsweise die Urethangruppen aufweisenden Polyisocyanate, die gemäss DE-PS Nr. 1618380 (US-PS Nr. 3644457) durch Umsetzung von 1 mol 4,4'-Diisocyanatodiphenylmethan mit 0,05 bis 0,3 mol an niedermolekularen Diolen oder Triolen, vorzugsweise Polypropylenglykolen mit einem unter 700 liegenden Molekulargewicht, zugänglich sind, oder Carbodiimid- und/oder Urethanimingruppen aufweisende Diisocyanate auf Basis von 4,4'-Diisocyanatodiphenylmethan, wie sie beispielsweise gemäss US-PS Nr. 3152162, 3384653, 3449256, DE-OS Nr. 2537685 oder EP-OS Nr. 5233 (US-A Nr. 903308) zugänglich sind. Auch die entsprechenden Modifizierungsprodukte auf Basis von Gemischen aus 2,4'- und 4,4'-Diisocyanatodiphenylmethan oder auch Gemische der — wie beschrieben — modifizierten 4,4'-Diisocyanatodiphenylmethane mit untergeordneten Mengen an höher als difunktionellen Polyisocyanaten der Diphenylmethanreihe, beispielsweise solche der in DE-OS Nr. 2624526 beschriebenen Art gehören zu den bevorzugten Polyisocyanaten. Im allgemeinen handelt es sich bei den bevorzugten, erfindungsgemäss einzusetzenden Polisocyanaten um bei Raumtemperatur flüssige, ggf. wie beschrieben chemisch modifizierte Polyisocyanate bzw. Polyisocyanatgemische der Diphenylmethanreihe einer (mittleren) NCO-Funktionalität von 2-2,2, insbesondere von 2, in denen als Hauptkomponente (mehr als 50 Gew.-%) 4,4'-Diisocyanatodiphenylmethan vorliegt.

Bei der erfindungswesentlichen Komponente b handelt es sich um mindestens 2 endständig angeordnete, gegenüber Isocyanatgruppen reaktionsfähige Gruppen aufweisende Polyether eines (aus der Funktionalität und dem Gehalt an gegenüber Isocyanatgruppen reaktionsfähigen Gruppen errechenbaren) mittleren Molekulargewichts von 1800-12000, vorzugsweise 2000-8000, deren endständige, gegenüber Isocyanatgruppen reaktionsfähige Gruppen zumindest zu 50, vorzugsweise zu 80-100 Eq-% aus primären und/oder sekundären, aromatisch oder aliphatisch, vorzugsweise aliphatisch gebundenen Aminogruppen und zum Rest aus primären und/oder sekundären, aliphatisch gebundenen Hydroxylgruppen bestehen. Im Falle der Verwendung von Polyethergemischen können einzelne Komponenten des Gemisches auch ein unter 1800, beispielsweise ein zwischen 500 und 1800 liegendes Molekulargewicht aufweisen, vorausgesetzt, dass das mittlere Molekulargewicht des Gemisches innerhalb der genannten Bereiche liegt. Die Verwendug derartiger Gemische mit Einzelkomponenten mit einem unter 1800 liegenden Molekulargewicht ist allerdings weniger bevorzugt. In diesen Verbindungen können die die Aminogruppen tragenden, endständigen Reste mit der Polyetherkette auch über Urethan- oder Estergruppen verknüpft sein. Die Herstellung dieser Aminopolyether erfolgt in an sich bekannter Weise. So kann beispielsweise eine Aminierung von Polyhydroxypolyethern, wie z. B. Polypropylenglykolethern, durch Reaktion mit Ammoniak in Gegenwart von Raney-Nickel und Wasserstoff durchgeführt werden (BE-PS Nr. 634741). US-PS Nr. 3654370 beschreibt die Herstellung von Polyoxyalkylenpolyaminen durch Umsetzung des entsprechenden Polyols mit Ammoniak und Wasserstoff in Gegenwart eines Nikkel-, Kupfer-, Chromkatalysators. In der DE-PS Nr. 1193671 wird die Herstellung von Polyethern mit Aminoendgruppen durch Hydrierung von cyanethylierten Polyoxypropylenethern beschrieben. Weitere Methoden zur Herstellung von Polyoxyalkylen(Polyether)aminen sind in US-PS Nr. 3155728, 3236895 und FR-PS Nr. 1551605 beschrieben. In der FR-PS Nr. 1466708 wird beispielsweise die Herstellung von sekundäre Aminoendgruppen aufweisenden Polyethern beschrieben.

Höhermolekulare Polyhydroxypolyether können durch Reaktion mit Isatosäureanhydrid in die entsprechenden, erfindungsgemäss als Komponente b geeigneten Anthranilsäureester überführt werden, wie dies beispielsweise in DE-OS Nr. 2019432, 2619840, US-PS Nr. 3808250, 3975428 oder 4016143 beschrieben ist. Auf diese Weise entstehen Polyether mit endständigen aromatischen Aminogruppen.

Durch Umsetzung von NCO-Präpolymeren auf Basis von Polyhydroxypolyethern mit Hydroxylgruppen aufweisenden Enaminen, Aldiminen oder Ketiminen und anschliessende Hydrolyse erhält man gemäss DE-OS Nr. 2546536 bzw. US-PS Nr. 3865791 höhermolekulare, endständige Aminogruppen aufweisende Verbindungen.

Bevorzugt eingesetzt werden Aminopolyether, die nach DE-OS Nr. 2948419 durch Hydrolyse von endständige Isocyanatgruppen aufweisenden Verbindungen erhalten werden. Bei diesem Verfahren werden vorzugsweise zwei oder drei Hydroxylgruppen aufweisende Polyether mit Polyisocyanaten zu NCO-Präpolymeren umgesetzt und in einem zweiten Schritt die Isocyanatgruppe durch Hydrolyse in eine Aminogruppe überführt.

Die erfindungsgemäss als Komponente b einzusetzenden Aminopolyether stellen oftmals Gemische der beispielhaft genannten Verbindungen dar und weisen (im statistischen Mittel) zwei bis drei endständige, gegenüber Isocyanatgruppen reaktionsfähige Gruppen auf.

Die beispielhaft genannten Aminopolyether können beim erfindungsgemässen Verfahren ggf. auch in Abmischung von aminogruppenfreien Polyhydroxypolyethern der in US-PS Nr. 4218543 beispielhaft genannten Art und/oder in Abmischung mit vergleichsweise niedermolekularen, hochfunktionellen Polyetherpolyolen, beispielsweise solchen des Molekulargewichtsbereichs 500-1000 und einer mittleren Hydroxylfunktionalität von 3 bis 6, eingesetzt werden, obwohl dies weniger bevorzugt ist. Im Falle der Verwendung derartiger Abmischungen muss jedoch darauf geachtet werden, dass mindestens 50 Eq.-% der in der Abmischung vorliegenden, gegenüber Isocyanatgruppen reaktionsfähigen Gruppen primäre und/oder sekundäre Aminogruppen der beispielhaft genannten Art darstellen.

Bei der beim erfindungsgemässen Verfahren einzusetzenden Komponente c handelt es sich um Diamine mit ausschliesslich aromatisch gebundenen, primären oder sekundären, vorzugsweise primären Aminogruppen des Molekulargewichtsbereichs 108-400. Beispiele derartiger Diamine sind 1,4-Diaminobenzol, 2,4-Diaminotoluol, 2,4'- und/oder 4,4'-Diaminodiphenylmethan, 3,3'-Dimethyl-4,4'-diaminodiphenylmethan oder 4,4'-Diaminodiphenylpropan-(2,2) bzw. beliebige Gemische derartiger Diamine.

Bei den bevorzugten, beim erfindungsgemässen Verfahren einzusetzenden Diaminen handelt es sich jedoch um solche, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen aufweisen, besonders bevorzugt um solche, die in jeweils mindestens einer ortho-Stellung zu den Aminogruppen einen Ethyl-, n-Propyl- und/oder Isopropylsubstituenten und ggf. in weiteren ortho-Stellungen zu den Aminogruppen Methylsubstituenten aufweisen.

Beispiele für bevorzugte bzw. besonders bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan.

Selbstverständlich können die genannten aromatischen Diamine auch im Gemisch angewendet werden. Besonders bevorzugt sind in diesem Zusammenhang 1-Methyl-3,5-diethyl-2,4-diaminobenzol oder eine Mischung aus diesem mit 1-Methyl-3,5-diethyl-2,6-diaminobenzol.

Das Kettenverlängerungsmittel c kommt beim erfindungsgemässen Verfahren vorzugsweise in Mengen von 5 bis 50, besonders bevorzugt 10 bis 40 Gew.-%, bezogen auf Komponente b, zum Einsatz.

Es ist einer der Hauptvorteile des erfindungsgemässen Verfahrens im Vergleich zum Verfahren der DE-OS Nr. 2622951, dass die Mitverwendung der an sich bekannten Formtrennmittel des Standes der Technik die Herstellung von Formkörpern mit ausgezeichneten, selbsttrennenden Eigenschaften ermöglicht. Demzufolge stellen diese beispielsweise in den obenerwähnten Literaturstellen genannten inneren Trennmittel Hilfsmittel d dar, die vorzugsweise beim erfindungsgemässen Verfahren mitverwendet werden. Grundsätzlich können alle Trennmittel des Standes der Technik beim erfindungsgemässen Verfahren mitverwendet werden. Bevorzugt sind innere Formtrennmittel, wie sie beispielsweise in DE-OS Nr. 1953637 (= US-PS Nr. 3726952), DE-OS Nr. 2121670 (= GB-PS Nr. 1365215), DE-OS Nr. 2431968 (= US-PS Nr. 4098731) bzw. in DE-OS Nr. 2404310 (= US-PS Nr. 4058492) beschrieben sind. Zu den bevorzugten Trennmitteln gehören somit die mindestens 25 aliphatische Kohlenstoffatome aufweisenden Salze von Fettsäuren mit mindestens 12 aliphatischen Kohlenstoffatomen und primären Mono-, Di- oder Polyaminen mit zwei und mehr Kohlenstoffatomen oder Amid- oder Estergruppen aufweisenden Aminen, die mindestens eine primäre, sekundäre oder tertiäre Aminogruppe besitzen, gesättigte und/oder ungesättigte COOH- und/oder OH-Gruppen aufweisende Ester von mono- und/oder polyfunktionellen Carbonsäuren und polyfunktionellen Alkoholen mit Hydroxyl- oder Säurezahlen von mindestens 5, esterartige Umsetzungsprodukte aus Ricinolsäure und langkettigen Fettsäuren, Salze aus Carbonsäuren und tertiären Aminen sowie natürliche und/oder synthetische Öle, Fette oder Wachse.

Besonders bevorzugt ist das Ölsäure- oder Tallölfettsäuresalz des amidgruppenhaltigen Amins, das durch Umsetzung von N-Dimethylaminopropylamin mit Ölsäure oder Tallölfettsäure erhalten worden ist.

Neben diesen beispielhaft genannte, bevorzugt einzusetzenden Trennmitteln können prinzipiell beim erfindungsgemässen Verfahren auch andere, an sich bekannte Trennmittel des Standes der Technik allein oder im Gemisch mit den bevorzugten, beispielhaft genannten Trennmitteln eingesetzt werden. Zu diesen weiterhin geeigneten Trennmitteln gehören beispielsweise die Umsetzungsprodukte aus Fettsäureestern und Polyisocyanaten gemäss DE-OS Nr. 2319648, die Umsetzungsprodukte aus rekationsfähige Wasserstoffatome aufweisenden Polysiloxanen mit Mono- und/oder Polyisocyanaten gemäss DE-OS Nr. 2356692 (= US-PS Nr. 4033912), Ester von Hydroxymethylgruppen aufweisenden Polysiloxanen mit Mono- und/oder Polycarbonsäuren gemäss DE-OS Nr. 2363452 (= US-PS Nr. 4024090) und Salze aus Aminogruppen enthaltenden Polysiloxanen und Fettsäuren gemäss DE-OS Nr. 2427273 oder 2431968 (US-PS Nr. 4098731).

Die genannten inneren Formtrennmittel werden, falls überhaupt, in einer Menge von insgesamt 0,1 bis 25, vorzugsweise 1 bis 10 Gew.-%, bezogen auf das gesamte Reaktionsgemisch, eingesetzt.

Obwohl für die Herstellung elastischer Formkörper aus den Komponenten a-c und darüber hinaus bei Einsatz der bevorzugten Formtrennmittel d keine Katalysatoren für die Reaktion zwischen Isocyanat- und gegenüber Isocyanatgruppen reaktionsfähigen Gruppen der Komponenten b und c eingesetzt werden müssen, können die Katalysatoren, die in bekannter Weise bei der Herstellung von Polyurethanschaumstoffen und mikrozellularen Elastomeren eingesetzt werden, als weitere Hilfs- bzw. Zusatzmittel d mitverwendet werden.

Als mitzuverwendende Katalysatoren kommen tertiäre Amine der an sich bekannten Art in Frage, z. B.: Triethylamin, Tributylamin, N-Methylmorpholin, N-Ethylmorpholin, N-Cocomorpholin, N,N,N',N'-Tetramethylethylendiamin, 1,4-Diazabicyclo-(2,2,2)-octan, N-Methyl-N'-dimethylaminoethylpiperazin, N,N-Dimethylbenzylamin, Bis-(N,N-diethylaminoethyl)adipat, N,N-Diethylbenzylamin, Pentamethyldiethylentriamin, N,N-Dimethylcyclohexylamin, N,N,N',N'-Tetramethyl-1,3-butandiamin, N,N-Dimethylimidazol-

β-phenylethylamin, 1,2-Dimethylimidazol und 2-Methylimidazol.

Auch organische Metallkatalysatoren, insbesondere organische Zinnkatalysatoren, wie z. B. Zinn(II)salze von Carbonsäuren wie Zinn(II)acetat, Zinn(II)octoat, Zinn(II)ethylhexoat und Zinn(II)laurat und die Dialkylzinnsalze von Carbonsäuren, wie z. B. Dibutylzinndiacetat, Dibutylzinndilaurat, Dibutylzinnmaleat oder Dioctylzinndiacetat, können allein oder in Kombination mit den tertiären Aminen verwendet werden. Weitere Vertreter von Katalysatoren sowie Einzelheiten über die Wirkungsweise der Katalysatoren sind im „Kunststoff-Handbuch", Bd. VII, herausgegeben von Vieweg und Höchtlen, Carl-Hanser-Verlag, München 1966, z. B. auf den Seiten 96 bis 102 beschrieben.

Die Katalysatoren werden, falls überhaupt, in einer Menge von etwa 0,001 und 10, vorzugsweise 0,05 bis 1 Gew.-%, bezogen auf die Komponente b, eingesetzt.

Nach dem erfindungsgemässen Verfahren werden vorzugsweise kompakte Formteile hergestellt, jedoch können auch Treibmittel als weitere Komponente d eingesetzt werden, wobei dann Formteile mit einer geschlossenen Oberfläche und einem zelligen Inneren erhalten werden. So können als Treibmittel Wasser und/oder leicht flüchtige organische Substanzen und/oder gelöste inerte Gase verwendet werden.

Als organische Treibmittel kommen z. B. Aceton, Ethylacetat, Methanol, Ethanol, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether in Frage.

Geeignete inerte Gase sind z. B. Stickstoff, Luft, Kohlendioxid.

Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azoisobuttersäurenitril, erzielt werden. Weitere Beispiele für Treibmittel sowie Einzelheiten über die Verwendung von Treibmitteln sind im „Kunststoff-Handbuch", Bd. VII, herausgegeben von Vieweg und Höchtlen, Carl-Hanser-Verlag, München 1966, z. B. auf den Seiten 108 und 109, 453 bis 455 und 507 bis 510, beschrieben.

Erfindungsgemäss können auch oberflächenaktive Zusatzstoffe als weitere Komponente d (Emulgatoren und Schaumstabilisatoren) mitverwendet werden. Als Emulgatoren kommen z. B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyethersiloxane in Frage. Diese Verbindungen sind im allgemeinen so aufgebaut, dass ein Copolymerisat aus Ethylenoxid und Propylenoxid mit einem Polydimethylsiloxanrest verbunden ist. Derartige Schaumstabilisatoren sind z. B. in der US-PS Nr. 2764565 beschrieben.

Als weitere Hilfs- und Zusatzmittel, die ggf. beim erfindungsgemässen Verfahren mitverwendet werden, seien auch Zellregler der an sich bekannten Art, wie z. B. Paraffine oder Fettalkohole oder Dimethylpolysiloxane, sowie Pigmente oder Farbstoffe und Flammschutzmittel der an sich bekannten Art, z. B. Trischlorethylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Glasfaser, Kieselgur oder Schlämmkreide genannt.

Weitere Beispiele von ggf. erfindungsgemäss mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im „Kunststoff-Handbuch", Bd. VII, herausgegeben von Vieweg und Höchtlen, Carl-Hanser-Verlag, München 1966, z. B. auf den Seiten 103 bis 113, beschrieben.

Als weitere, ggf. mitzuverwendende Hilfs- und Zusatzmittel kommen auch beispielsweise niedermolekulare, d. h. ein Molekulargewicht von 62-500, vorzugsweise 62-400 aufweisende, mehrwertige Alkohole in Betracht, die ggf. zur Modifizierung der Eigenschaften der Formkörper neben den aminischen Kettenverlängerungsmitteln c in Mengen bis zu 50 Eq-%, bezogen auf die gegenüber Isocyanatgruppen reaktionsfähigen Gruppen der Komponente c mitverwendet werden können. Hierzu gehören beispielsweise Ethylenglykol, Butandiol-1,4, Hexamethylenglykol, Trimethylolpropan, Diethylenglykol, Triethylenglykol, Dipropylenglykol, Tripropylenglykol, Propoxylierungsprodukte von Trimethylolpropan mit einem Molekulargewicht von bis zu 500, vorzugsweise bis zu 400, oder Propoxylierungsprodukte von Ethylendiamin mit einem Molekulargewicht von bis zu 500, vorzugsweise bis zu 400. Die Mitverwendung derartiger, niedermolekularer Polyhydroxylverbindungen ist jedoch weniger bevorzugt.

Bei der Durchführung des erfindungsgemässen Verfahrens wird die Menge der Komponente a (Polyisocyanatkomponente) vorzugsweise so bemessen, dass im schäumfähigen Gemisch eine Isocyanatkennzahl von 70-130, insbesondere 90-110, vorliegt. Unter Isocyanatkennzahl versteht man hierbei den Quotienten aus Anzahl der Isocyanatgruppen und Anzahl der gegenüber Isocyanaten reaktiven Gruppen, multipliziert mit 100. In die Berechnung der Isocyanatkennzal gehen hierbei die ggf. in den Trennmitteln vorliegenden, gegenüber Isocyanatgruppen reaktionsfähigen Gruppen (Carboxylgruppen) nicht ein. Bei der Durchführung des erfindungsgemässen Verfahrens wird nach der bekannten Reaktionsspritzgusstechnik (RSG-Verfahren) gearbeite. Hierbei kommen im allgemeinen zwei Reaktionskomponenten zum Einsatz, wobei die Polyisocyanatkomponente a die erste und die Polyaminkomponente, d. h. das Gemisch der Komponenten b und c die zweite Reaktionskomponente darstellen. Die ggf. mitzuverwendenden Komponenten d werden im allgemeinen der Polyaminkomponente zugemischt, jedoch kann es auch zweckmässig sein, beispielsweise bei der Verwendung von Isocyanatgruppen aufweisenden Trennmitteln, diese vor der Durchführung des erfindungsgemässen Verfahrens der Polyisocyanatkomponente a einzuverleiben. Grundsätzlich ist es selbstverständlich auch möglich, solche Mischköpfe zu verwenden, die den Einsatz von drei oder vier getrennten Komponenten bei der Durchführung des erfidnungsgemässen Verfahrens gestatten, so dass eine Vormischung der Einzelkomponenten nicht erforderlich ist. Die Menge des in die Form eingebrachten, ggf. schäumfähigen Gemisches wird im allgemeinen so bemessen, dass die Formkörper eine Dichte von 0,8-1,4, vorzugsweise von 0,9-1,2 g/cm³, aufweisen. Insbesondere bei der Mitverwendung von mineralischen Füllstoffenkönnen Formkörper mit einer über 1,2 g/cm³ liegenden Dichte resultieren. Die Formkörper können nach einer Formstandzeit von 5 bis 90, vorzugsweise 20 bis 60 s, entformt werden.

Als Ausgangstemperatur des in die Form eingebrachten Gemisches wird im allgemeinen eine Temperatur zwischen 10 und 60, vorzugsweise 20 bis 50°C, gewählt. Die Temperatur der Form beträgt im allgemeinen 40 bis 100, vorzugsweise 50 bis 70°C.

Die nach dem erfindungsgemässen Verfahren erhältlichen Formkörper eignen sich insbesondere zur Herstellung von flexiblen Automobilstossstangen bzw. Karosserieelementen.

Durch geeignete Variation der Ausgangsverbindungen a bis d, insbesondere bei relativ geringem Anteil an Diamin c, können aber z. B. auch flexible Schuhsohlen mit gutem Abriebverhalten und ausgezeichneter mechanischer Festigkeit erhalten werden.

*Beispiele:*

Die Verarbeitung der in den folgenden Beispielen beschriebenen Rezepturen erfolgte mit Hilfe der Reaktionsspritzgusstechnik oder *reaction injection moulding* (RIM).

Polyamingemisch und Polyisocyanat wurden — ggf. in Abmischung mit dem die Entformung erleichternden Trennmittel — einem Hochdruckdosieraggregat zugeführt und nach intensiver Vermischung in einem zwangsgesteuerten Mischkopf in kürzester Zeit in ein 60°C heisses Metallwerkzeug gedrückt.

Das Werkzeug — eine Kastenform aus Aluminium — erlaubt die Herstellung eines Formteils der folgenden Abmessungen:

|  | (mm) |
|---|---|
| Wandstärke | 4 |
| Grundfläche | 120 × 400 |
| Seitenhöhe | 50 bzw. 120 |

In das Oberteil des Werkzeugs sind 24 mm tiefe, 3 mm breite, konisch zulaufende Aussparungen eingefräst, die im Formteil dann zu Rippen führen. Bei der Entformung sind starke Scherkräfte zu überwinden.

*Beispiel 1 (Vergleich):*

77,00 Gew.-Teile eines Polyethers der OH-Zahl 28, der durch Addition von Propylenoxid und anschliessende Addition von Ethylenoxid an Trimethylolpropan erhalten wurde,

23,00 Gew.-Teile einer Mischung aus 65 Gew.-Teilen 1-Methyl-3,5-diethylphenylen-diamin-(2,4) und 35 Teilen 1-Methyl-3,5-diethylphenylendiamin-(2,6),

0,10 Gew.-Teile Dibutylzinndilaurat, und

0,15 Gew.-Teile 1,4-Diazabicyclo-(2,2,2)-octan

werden zu einer Polyolkomponente vereinigt und mit 56,00 Gew.-Teilen eines Umsetzungsproduktes aus Tripropylenglykol und 4,4'-Diphenylmethandiisocyanat (23 Gew.-% NCO) nach dem RSG-Verfahren verarbeitet.

Die Temperatur der Rohstoffe beträgt 40°C. Die Formstandzeit beträgt 1 min.

Ohne Anwendung äussere Trennmittel können 5 Formteile entformt werden; dabei bildet sich auf der Werkzeugoberfläche eine störende Schicht, die bei weiteren Entformungen zum Zerreissen des Formteiles führt. Das PUR-Formteil hat folgende mechanische Werte:

| Rohdichte (DIN 53420) | 1083 kg/m³ |
|---|---|
| Zugfestigkeit (DIN 53504) | 30,4 MPa |
| Bruchdehnung (DIN 53504) | 352% |
| Weiterreissfestigkeit (DIN 53515) |  |
| mit Schnitt | 71,2 kN/m |
| Shore D (DIN 53505) | 54 |
| G'-Modul (DIN 53445) −30°C | 287 MPa |
| + 20°C | 128 MPa |
| + 65°C | 78,4 MPa |
| Biegemodul (ASTM-D 790-71) | 292 MPa |

*Beispiel 2 (Vergleich mit innerem Trennmittel):*

77,00 Gew.-Teile eines Polyethers der OH-Zahl 28, der durch Addition von Propylenoxid und anschliessende Addition von Ethylenoxid an Trimethylolpropan erhalten wurde,

23,00 Gew.-Teile einer Mischung aus 65 Gew.-Teilen 1-Methyl-3,5-diethylphenylen-diamin-(2,4) und 35 Teilen 1-Methyl-3,5-diethylphenylendiamin-(2,6),

0,10 Gew.-Teile Dibutylzinndilaurat,

0,15 Gew.-Teile 1,4-Diazabicyclo-(2,2,2)-octan, und

4,60 Gew.-Teile des stöchiometrischen Tallölfettsäuresalzes aus 1 mol Tallölfettsäure und 1 mol Amidamin, hergestellt aus 1 mol 3-Dimethylaminopropylamin-1 und 1 mol Tallölfettsäure, werden zu einer Polyolkomponente vereinigt und mit 56,00 Gew.-Teilen eines Umsetzungsproduktes aus Tripropylenglykol und 4,4'-Diphenylmethandiisocyanat (23 Gew.-% NCO) nach dem RSG-Verfahren verarbeitet. Die Verarbeitungsbedingungen werden wie in Beispiel 1 gewählt.

Nach Öffnung des Werkzeuges kann das Formteil nur zerstört entnommen werden. Das Polyurethanelastomere hat keinerlei Festigkeit.

*Beispiel 3:*

77,00 Gew.-Teile eines Aminopolyethers der NH-Zahl 26 (80 Eq-% Aminogruppen, 20 Eq-% Hydroxylgruppen), der aus dem Polyetherpolyol gemäss Beispiel 1 durch Reaktion mit Ammoniak in Gegenwart von Raney-Nickel und Wasserstoff erhalten wurde,

23,00 Gew.-Teile einer Mischung aus 65 Gew.-Teilen 1-Methyl-3,5-diethylphenylen-diamin-(2,4) und 35 Teilen 1-Methyl-3,5-diethylphenylendiamin-(2,6),

0,10 Gew.-Teile Dibutylzinndilaurat,

0,15 Gew.-Teile 1,4-Diazabicyclo-(2,2,2)-octan

werden zu einer Polyaminkomponente vereinigt und mit 58,00 Gew.-Teilen eines Umsetzungsproduktes aus Tripropylenglykol und 4,4'-Diphenylmethandiisocyanat (23 Gew.-% NCO) nach dem RSG-Verfahren verarbeitet. Die Verarbeitungsbedingungen werden wie in Beispiel 1 gewählt.

Ohne Anwendung äusserer Trennmittel können 8 bis 10 Formteile entformt werden; weitere Entformungen führen zur Zerstörung des Formteils.

Das Formteil hat folgende mechanische Werte:

| Rohdichte (DIN 53420) | 1069 kg/m³ |
|---|---|
| Zugfestigkeit (DIN 53504) | 35,7 MPa |
| Bruchdehnung (DIN 53504) | 328% |
| Weiterreissfestigkeit (DIN 53515) |  |
| mit Schnitt | 70,4 kN/m |
| Shore D (DIN 53505) | 57 |
| G'-Modul (DIN 53445) − 30°C | 293 MPa |
| + 20°C | 157 MPa |
| + 65°C | 84 MPa |
| Biegemodul (ASTM-D 790-71) | 346 MPa |

*Beispiel 4:*

Das System von Beispiel 3 wird ohne Katalysator (Dibutylzinndilaurat und 1,4-Diazabicyclo-(2,2,2)-octan) nach dem RSG-Verfahren mit den in Beispiel 1 gewählten Verarbeitungsbedingungen umgesetzt.

Ohne Anwendung äusserer Trennmittel können bei einer Formstandzeit von 1 min noch 5 Formteile entformt werden. Die Festigkeit bei Entformung *(green strength)* der Formteile ist ausgezeichnet. Folgende mechanische Werte werden ermittelt:

| Rohdichte (DIN 53420) | 1072 kg/m³ |
|---|---|
| Zugfestigkeit (DIN 53504) | 27,5 MPa |
| Bruchdehnung (DIN 53504) | 305% |
| Weiterreissfestigkeit (DIN 53515) |  |
| mit Schnitt | 83,3 kN/m |
| Shore D (DIN 53505) | 60 |
| G'-Modul (DIN 53445) −30°C | 334 MPa |
| + 20°C | 158 MPa |
| + 65°C | 95 MPa |
| Biegemodul (ASTM-D 790-71) | 358 Mpa |

*Beispiel 5:*

100,00 Gew.-Teile der Polyaminkomponente von Beispiel 3 werden mit 4,60 Gew.-Teilen des stöchiometrischen Tallölfettsäuresalzes aus 1 mol Tallölfettsäure und 1 mol Amidamin, hergestellt aus 1 mol 3-Dimethylaminopropylamin-1 und 1 mol Tallölfettsäure, vereinigt, und mit

56,00 Gew.-Teilen eines Umsetzungsproduktes aus Tripropylenglykol und 4,4-Diphenylmethandiisocyanat (23 Gew.-% NCO) nach dem RSG-Verfahren verarbeitet. Die Verarbeitungsbedingungen werden wie in Beispiel 1 gewählt.

Ohne Anwendung äusserer Trennmittel konnten mühelos Formteile entnommen werden. Nach mehr als 50 Entformungen wurde die Versuchsreihe abgebrochen; Aufbau einer störenden Schicht auf der Werkzeugoberfläche wurde nicht beobachtet.

Das Formteil hat folgende mechanische Werte:

| | |
|---|---|
| Rohdichte (DIN 53420) | 1093 kg/m³ |
| Zugfestigkeit (DIN 53504) | 32,6 MPa |
| Bruchdehnung (DIN 53504) | 318% |
| Weiterreissfestigkeit (DIN 53515) | |
| mit Schnitt | 91,4 kN/m |
| Shore D (DIN 53505) | 66 |
| G'-Modul (DIN 53445) −30°C | 380 MPa |
| + 20°C | 173 MPa |
| + 65°C | 102 MPa |
| Biegemodul (ASTM-D 790-71) | 402 MPa |

*Beispiel 6:*

73,40 Gew.-Teile eines Aminopolyethers der NH-Zahl 19,4, der durch Umsetzung des Polyetherpolyols gemäss Beispiel 1 mit 2,4-Diisocyanatotoluol und nachfolgende Hydrolyse gemäss DE-OS Nr. 2948419 erhalten wurde,

22,00 Gew.-Teile einer Mischung aus 65 Gew.-Teilen 1-Methyl-3,5-diethylphenylendiamin-(2,4) und 35 Teilen 1-Methyl-3,5-diethylphenylendiamin-(2,6),

0,10 Gew.-Teile Dibutylzinndilaurat,

0,15 Gew.-Teile 1,4-Diazabicyclo-(2,2,2)-octan, und

4,40 Gew.-Teile des stöchiometrischen Tallölfettsäuresalzes aus 1 mol Tallölfettsäure und 1 mol Amidamin, hergestellt aus 1 mol 3-Dimethylaminopropylamin-1 und 1 mol Tallölfettsäure, werden zu einer Polyaminkomponente vereinigt, und mit

54,00 Gew.-Teilen eines Umsetzungsproduktes aus Tripropylenglykol und 4,4'-Diphenylmethandiisocyanat (23 Gew.-% NCO) nach dem RSG-Verfahren verarbeitet. Die Verarbeitungsbedingungen werden wie in Beispiel 1 gewählt.

Ohne Anwendung äusserer Trennmittel können die Formteile mühelos entnommen werden. Nach mehr als 30 Entformungen wurde die Versuchsreihe abgebrochen; Aufbau einer störenden Schicht auf der Werkzeugoberfläche wurde nicht beobachtet.

Das Formteil hat folgende mechanische Werte:

| | |
|---|---|
| Rohdichte (DIN 53420) | 1088 kg/m³ |
| Zugfestigkeit (DIN 53504) | 33,0 MPa |
| Bruchdehnung (DIN 53504) | 305% |
| Weiterreissfestigkeit (DIN 53515) | |
| mit Schnitt | 82,2 kN/m |
| Shore D (DIN 53505) | 67 |
| G'-Modul (DIN 53445) −30°C | 339 MPa |
| + 20°C | 153 MPa |
| + 65°C | 90,5 MPa |
| Biegemodul (ASTM-D 790-71) | 407 MPa |

*Beispiel 7:*

55,00 Gew.-Teile eines linearen, endständige primäre, aliphatisch gebundene Aminogruppen aufweisenden Polyoxypropylenpolyethers des Molekulargewichts 2000 (Jeffamine D 2000 von Jefferson Chemical Company),

18,30 Gew.-Teile des Polyetherpolyols aus Beispiel 1,

22,00 Gew.-Teile einer Mischung aus 65 Gew.-Teilen 1-Methyl-3,5-diethylphenylendiamin-(2,4) und 35 Gew.-Teilen 1-Methyl-3,5-diethylphenylendiamin-(2,6),

0,10 Gew.-Teile Dibutylzinndilaurat,

0,15 Gew.-Teile 1,4-Diazabicyclo-(2,2,2)-octan, und

4,50 Gew.-Teile des stöchiometrischen Tallölfettsäuresalzes aus 1 mol Amidamin, hergestellt aus 1 mol 3-Dimethylaminopropylamin-1 und 1 mol Tallölfettsäure, werden zu einer Polyaminkomponente vereinigt, und mit

60,50 Gew.-Teilen eines Umsetzungsproduktes aus Tripropylenglykol und 4,4'-Diphenylmethandiisocyanat (23 Gew.-% NCO) nach dem RSG-Verfahren verarbeitet. Die Verarbeitungsbedingungen werden wie in Beispiel 1 gewählt.

Ohne Anwendung äusserer Trennmittel können die Formteile mühelos entnommen werden. Nach mehr als 50 Entformungen wurde die Versuchsreihe abgebrochen; Aufbau einer störenden Schicht auf der Werkzeugoberfläche wurde nicht beobachtet.

Das Formteil hat folgende mechanische Werte:

| | |
|---|---|
| Rohdichte (DIN 53420) | 1071 kg/m³ |
| Zugfestigkeit (DIN 53504) | 42,1 MPa |
| Bruchdehnung (DIN 53504) | 376% |
| Weiterreissfestigkeit (DIN 53515) | |
| mit Schnitt | 94 kN/m |
| Shore D (DIN 53505) | 64 |
| G'-Modul (DIN 53445) −30°C | 628 MPa |
| + 20°C | 189 MPa |
| + 65°C | 86 MPa |
| Biegemodul (ASTM-D 790-71) | 375 MPa |

**Patentansprüche**

1. Verfahren zur Herstellung von elastischen Formkörpern mit einer geschlossenen Oberflächenschicht, aus Polyharnstoffelastomeren durch Umsetzung in geschlossenen Formen eines Reaktionsgemisches aus

a) einer Polyisocyanatkomponentee, bestehend aus mindestens einem Di- oder Polyisocyanat mit ausschliesslich aromatisch gebundenen Isocyanatgruppen,

b) Verbindungen mit einem Molekulargewicht zwischen 1800 und 12000, welche mindestens 2 gegenüber Isocyanatgruppen reaktionsfähige Gruppen aufweisen,

c) Diaminen mit 2 primären und/oder sekundären, aromatisch gebundenen Aminogruppen des Molekulargewichtsbereichs 108-400, und

d) ggf. den in der Polyurethanchemie an sich bekannten Hilfs- und Zusatzmitteln, wobei die Komponenten (a-d) als *one-shot*-System nach der Reaktionsspritzgusstechnik verarbeitet werden, dadurch gekennzeichnet, dass man als Komponente (b) Polyether verwendet, deren gegenüber Isocyanatgruppen reaktionsfähige Gruppen zumindest zu 50% aus primären und/oder sekundären Aminogruppen bestehen.

2. Verfahren gemäss Anspruch 1, dadurch gekennzeichnet, dass man als Komponente (c) diprimäre, aromatische Diamine verwendet, die zumindest in jeweils einer ortho-Stellung zu den Aminogruppen einen Alkylsubstituenten mit 1 bis 3 Kohlenstoffatomen aufweisen.

3. Verfahren gemäss den Ansprüchen 1 und 2, dadurch gekennzeichnet, dass man als Komponente (c) diprimäre aromatische Diamine verwendet, die in ortho-Stellung zur ersten Aminogruppe mindestens einen Alkylsubstituenten mit 1 bis 3 Kohlenstoffatomen und in ortho-Stellung zur zweiten Aminogruppe 2 Alkylsubstituenten mit 1 bis 3 Kohlenstoffatomen aufweisen.

4. Verfahren gemäss den Ansprüchen 1 bis 3, dadurch gekennzeichnet, dass man als Komponente (c) diprimäre, aromatische Diamine verwendet, die in mindestens jeweils einer ortho-Stellung zu den Aminogruppen Ethyl-, n-Propyl- und/oder Isopropylsubstituenten und ggf. in weiteren ortho-Stellungen zu den Aminogruppen Methylsubstituenten aufweisen.

5. Verfahren gemäss den Ansprüchen 1 bis 4, dadurch gekennzeichnet, dass man als Komponente (d) innere Formtrennmittel mitverwendet.

## Revendications

1. Procédé de préparation d'objets moulés élastiques à couche de surface fermée en élastomères de polyurées par réaction dans des moules fermés d'un mélange de réaction consistant en:

a) un composant polyisocyanate consistant en au moins un di- ou polyisocyanate dont les groupes isocyanate sont exclusivement à liaisons aromatiques,

b) des composés de poids moléculaire 1 800 à 12 000 contenant au moins deux groupes réactifs à l'égard des groupes isocyanate.

c) des diamines contenant deux groupes amino primaires et/ou secondaires à liaisons aromatiques, de poids moléculaires 108 à 400, et

d) le cas échéant, les produits auxiliaires et additifs connus en soi dans la chimie des polyuréthannes, les composants a à d étant travaillés en tant que système *one-shot* par la technique de moulage réactif par injection, caractérisé en ce que l'on utilise en tant que composant b des polyéthers dont les groupes réactifs à l'égard des groupes isocyanate consistent pour au moins 50% en groupes amino primaires et/ou secondaires.

2. Procédé selon la revendication 1, caractérisé en ce que l'on utilise en tant que composant c des diamines aromatiques diprimaires contenant, dans au moins une position ortho de chacun des groupes amino, un substituant alkyle en $C_1$-$C_3$.

3. Procédé selon les revendications 1 et 2, caractérisé en ce que l'on utilise en tant que composant c des diamines aromatiques diprimaires portant, en position ortho du premier groupe amino, au moins un substituant alkyle en $C_1$-$C_3$ et, en position ortho du deuxième groupe amino, deux substituants alkyle en $C_1$-$C_3$.

4. Procédé selon les revendications 1 à 3, caractérisé en ce que l'on utilise en tant que composant c des diamines aromatiques diprimaires portant, dans au moins une position ortho de chacun des groupes amino, des substituants éthyle, n-propyle et/ou isopropyle et, le cas échéant, des substituants méthyle dans d'autres positions ortho des groupes amino.

5. Procédé selon les revendications 1 à 4, caractérisé en ce que l'on utilise en tant que composant d des agents de démoulage internes.

## Claims

1. Process for the production of elastic moulded articles having a closed surface layer from polyurea elastomers by reacting, in closed moulds, a reaction mixture of:

(*a*) a polyisocyanate component consisting of at least one di- or polyisocyanate having exclusively aromatically bound isocyanate groups,

(*b*) compounds having a molecular weight between 1,800 and 12,000, which have at least 2 groups which are reactive towards isocyanate groups,

(*c*) diamines having 2 primary and/or secondary aromatically bound amino groups of a molecular weight in the range of 108 to 400, and

(*d*) optionally, the auxiliaries and additives known *per se* in polyurethane chemistry, components (*a*) to (*d*) being processed as a one-shot system by the reaction injection moulding technique, characterised in that polyethers in which at least 50% of the groups which are reactive towards isocyanate groups consist of primary and/or secondary amino groups are used as component (*b*).

2. Process according to Claim 1, characterised in that diprimary aromatic diamines having an alkyl substituent with 1 to 3 carbon atoms in each case in at least one ortho position to the amino groups are used as component (*c*).

3. Process according to Claims 1 and 2, characterised in that diprimary aromatic diamines having at least one alkyl substituent with 1 to 3 carbon atoms in ortho position to the first amino group, and 2 alkyl substituents with 1 to 3 carbon atoms in ortho position to the second amino group, are used as component (*c*).

9

4. Process according to Claims 1 to 3, characterised in that diprimary aromatic diamines having in each case ethyl, n-propyl and/or isopropyl substituents in at least one ortho position to the amino groups, and optionally methyl substituents in other ortho positions to the amino groups, are used as component (c).

5. Process according to Claims 1 to 4, characterised in that internal mould release agents are included as component (d).